# EUROPÄISCHE PATENTSCHRIFT

(11) **EP 4 309 884 B1**
(45) Veröffentlichungstag und Bekanntmachung des Hinweises auf die Patenterteilung: **10.12.2025**
(21) Anmeldenummer: 23179999.0
(22) Anmeldetag: 19.06.2023
(51) Int. Cl.: B29D 30/06, B29C 35/02

(54) **REIFENVULKANISATIONSFORM MIT METALLISCHEN VULKANISATIONSFORMTEILEN**
TIRE VULCANIZATION MOLD WITH METALLIC VULCANIZATION MOLDING PARTS
MOULE DE VULCANISATION DE PNEUS AVEC DES PIÈCES MÉTALLIQUES MOULÉES PAR VULCANISATION

(30) Priorität: 06.07.2022 DE 102022206927
(43) Veröffentlichungstag der Anmeldung: 24.01.2024
(73) Patentinhaber: Continental Reifen Deutschland GmbH, 30175 Hannover (DE)
(72) Erfinder: Hesse, Heiko, 30165 Hannover (DE); Kielhorn, Lars, 30165 Hannover (DE)
(74) Vertreter: Continental Corporation

(56) Entgegenhaltungen:
- CN-A- 107 160 598
- DE-A1- 102017 222 510
- JP-A- 2000 079 616
- JP-A- H11 351 977
- KR-A- 20110 071 472
- US-A1- 2004 103 967
- US-A1- 2012 280 414
- US-A1- 2016 082 681
- US-A1- 2020 173 964

## Beschreibung

Die Erfindung betrifft eine Reifenvulkanisationsform mit metallischen Vulkanisationsformteilen, wobei ein verfahrbar gelagertes Vulkanisationsformteil einen Sensor aufweist. Weiterhin betrifft die Erfindung eine Vorrichtung mit der Reifenvulkanisationsform sowie ein Verfahren zum Ermitteln eines Parameters der Reifenvulkanisationsform.

Reifenvulkanisationsformen zum Vulkanisieren von Reifen sind bekannt. Prozessparameter von Reifenvulkanisationsformen haben einen relevanten Einfluss auf den hergestellten Reifen. Zum Ermitteln von Parametern der Reifenvulkanisationsform sind Sensoren notwendig, die den Bedingungen, denen Reifenvulkanisationsformen ausgesetzt sind, standhalten. Das Übertragen von Sensordaten vom Sensor zu einer Auswerteeinheit ist aufwendig zu realisieren. Derartige Reifenvulkanisationsformen sind beispielweise aus der JP 2000 079616 A, der KR 2011 0071472 A und der CN 107 160 598 A bekannt.

Vor diesem Hintergrund liegt der Erfindung die Aufgabe zugrunde eine Reifenvulkanisationsform sowie Verfahren zum besonders genauen Messen eines Parameters der Reifenvulkanisationsform derart auszuführen, dass Sensoren und Sendeempfangseinheiten derart vorgesehen werden, dass sie den vorliegenden Umgebungsbedingungen standhalten, wobei die Übertragung von Sensordaten vom Sensor zu einer Sendeempfangseinheit in einer einfachen und beständigen Form gelöst wird.

Diese Aufgabe wird gelöst mit einer Vorrichtung gemäß den Merkmalen des Patentanspruches 1 sowie einer Vorrichtung und einem Verfahren gemäß den nebengeordneten Ansprüchen. Die Unteransprüche betreffen besonders zweckmäßige Weiterbildungen der Erfindung.

Erfindungsgemäß ist also eine Reifenvulkanisationsform mit metallischen Vulkanisationsformteilen vorgesehen, wobei ein verfahrbar gelagertes Vulkanisationsformteil einen Sensor aufweist, wobei der Sensor vom verfahrbar gelagerten Vulkanisationsformteil umschlossen und im Bereich von einer Funktionsfläche positioniert ist, wobei elektromagnetische Wellen zur Datenübertragung und Energieübertragung über einen Luftspalt innerhalb der Reifenvulkanisationsform von einer sich in der Reifenvulkanisationsform befindenden Sendeempfangseinheit zu einer zu der Sendeempfangseinheit verfahrbar gelagerten mit dem Sensor verbundenen Antenne vorgesehen sind.

Der Sensor ist vom verfahrbar gelagerten Vulkanisationsformteil umschlossen, indem der Sensor nicht aus einer Oberfläche des Vulkanisationsformteils herausragt und nicht eine Teilfläche der Oberfläche des Vulkanisationsformteils ausbildet. Da der Sensor von dem Vulkanisationsformteil umschlossen ist, wirken keine die Funktionsdauer des Sensors verringernden mechanischen oder chemischen Einflüsse auf den Sensor.

Der Sensor ist im Bereich von einer Funktionsfläche positioniert und hat somit einen geringen Abstand von beispielsweise kleiner 20 mm oder von kleiner 10 mm oder von kleiner 5 mm zu der Funktionsfläche.

Durch die Positionierung des Sensors im Bereich einer Funktionsfläche können die Parameter der Funktionsfläche besonders genau bestimmt werden. Ist der Sensor beispielsweise ein Temperatursensor, der im Bereich einer Kontaktfläche zum Ausbilden der Reifengeometrie angeordnet ist, wird die relevante Kontaktflächentemperatur durch den geringen Abstand des Sensors zur Kontaktfläche mit einer hohen Genauigkeit gemessen.

Eine Übertragung von elektromagnetischen Wellen zur Daten- und Energieübertragung zu einem Sensor ist durch die metallischen Vulkanisationsformteile hindurch nicht möglich. Es wurde erkannt, dass eine kabelgebundene Daten- und Energieübertragung zu einem Sensor in den Vulkanisationsformteilen nachteilhaft ist, insbesondere wenn die Vulkanisationsformteile beweglich gelagert sind, da eine Verkabelung aufwendig zu realisieren sowie bei den gegebenen Umgebungsbedingungen nicht dauerhaft beständig ist. Es wurde erkannt, dass eine Daten- und Energieübertragung in der Reifenvulkanisationsform mittels elektromagnetischer Wellen über einen Luftspalt von einem mit einer Antenne verbundenen Sensor zu einer Sendeempfangseinheit einfach zu realisieren ist, einen geringen Wartungsaufwand verursacht und eine hohe Beständigkeit aufweist.

Erfindungsgemäß wird der Sensor über einen Luftspalt von der Sendeempfangseinheit mit Energie versorgt, so dass der Sensor keinen Energiespeicher oder mit einer anderen Energiequelle verbunden sein muss. Dies ist insbesondere vorteilhaft, da Energiespeicher wie Batterien bei den in einer Reifenvulkanisationsform vorherrschenden Temperaturen nicht beständig sind.

Somit wird ein Sensor mit Antenne sowie eine Übertragung der Sensordaten ermöglicht, wobei der Sensor durch seine Positionierung besonders genau relevante Parameter der Reifenvulkanisationsform messen kann und dabei eine hohe Beständigkeit aufweist. Weiterhin wird eine beständige Datenübertragung und Energieübertragung innerhalb der Reifenvulkanisationsform zu verfahrbar gelagerten Vulkanisationsformteilen ermöglicht.

Eine vorteilhafte Weiterbildung sieht vor, dass der Sensor, der bevorzugt ein passiver Sensor ist, mit der verbundenen Antenne zur Verwendung von Temperaturen bei einem Temperaturbereich bis 200°C bevorzugt bis 250°C und weiter bevorzugt bis 300°C ausgelegt ist. In Reifenvulkanisationsformen herrschen hohe Temperaturen, so dass der Sensor auch an Positionen mit besonders hohen Temperaturen vorgesehen werden kann, wenn er eine besonders hohe Temperaturbeständigkeit aufweist.

Eine vorteilhafte Weiterbildung sieht vor, dass der Sensor mit der mit dem Sensor verbundenen Antenne ein mikroelektromechanisches System ist, wobei das mikroelektromechanische System bevorzugt ein piezoelektrisches Substrat aufweist. Mikroelektromechanische Systeme haben sich als Sensoren unter den in einer Reifenvulkanisationsform herrschenden Bedingungen als besonders robust und zuverlässig erwiesen. Es wurde festgestellt, dass piezoelektrische Substrate besonders robust gegenüber den vorherrschenden Bedingungen sind.

Eine vorteilhafte Weiterbildung sieht vor, dass das mikroelektromechanische System ein Oberflächenwellensensor ist. Oberflächenwellensensoren haben sich als besonders genaue und zuverlässige Sensoren für die Verwendung in einer Reifenvulkanisationsform herausgestellt.

Eine vorteilhafte Weiterbildung sieht vor, dass der Sensor ein Temperatursensor und/oder ein passives Element ist. Die Verwendung eines Temperatursensors hat sich als besonders vorteilhaft herausgestellt, da die Temperaturen einer Reifenvulkanisationsform besonders relevante Parameter sind. Die Verwendung eines passiven Elements als Sensor hat sich als vorteilhaft erwiesen, da diese in einfacher Weise mittels elektromagnetischer Wellen mit der benötigten Energie versorgt werden können. Unter passiven Elementen werden Bauelemente verstanden, die keine Verstärkungswirkung zeigen und keine Steuerfunktion besitzen.

Eine vorteilhafte Weiterbildung sieht vor, dass der Sensor an die Sendeempfangseinheit unverarbeitete Sensordaten übermitteln. Durch eine Übermittlung von unverarbeiteten Sensordaten, also den vom Sensor erzeugten Daten, kann eine Auswerteeinheit am Sensor entfallen.

Eine vorteilhafte Weiterbildung sieht vor, dass die Funktionsfläche eine Kontaktfläche zum in Kontakt treten mit einem Reifen ist. Die Kontaktfläche bestimmt die Geometrie des Reifens und ist daher eine besonders relevante Funktionsfläche der Reifenvulkanisationsform.

Eine vorteilhafte Weiterbildung sieht vor, dass die Sendeempfangseinheit zur Datenübertragung und Energieübertragung eine Kabelverbindung zu einer Auswerteinheit und eine Senderantenne aufweist. Die Kabelverbindung zur Auswerteeinheit ermöglicht in einfacher Form eine Daten- sowie Energieübertragung zur Sendeempfangseinheit, so dass diese keinen Energiespeicher aufweisen muss. Eine zuverlässige Datenübertragung in die Reifenvulkanisationsform wird gewährleistet. Die Senderantenne ermöglicht das Senden und Empfangen von Daten und Energie zu und von der Antenne des Sensors.

Eine vorteilhafte Weiterbildung sieht vor, dass der Sensor in einer Bohrung in dem Vulkanisationsformteil positioniert ist, wobei die Bohrung eine Sackbohrung ist, die von einer der Funktionsfläche abgewandten Außenfläche des Vulkanisationsformteils bis an die Funktionsfläche ausgeführt ist. Durch eine derartige Sackbohrung wird in einfacher Form eine bevorzugte Positionierung des Sensors in dem Vulkanisationsformteilen an einer Funktionsfläche ermöglicht.

Erfindungsgemäß ist eine Vorrichtung mit einer erfindungsgemäßen Reifenvulkanisationsform und einer Auswerteeinheit vorgesehen, wobei die Auswerteeinheit zur Energieübertragung und bevorzugt zur Datenübertragung eine Verbindung, bevorzugt eine Kabelverbindung, zur Sendeempfangseinheit aufweist. Die Vorrichtung ermöglicht das Auswerten der Sensordaten, sodass eine Bewertung der Sensordaten sowie bevorzugt eine Regelung anhand der Sensordaten möglich wird.

Erfindungsgemäß ist ein Verfahren zum Ermitteln eines Parameters einer Reifenvulkanisationsform vorgesehen, wobei die Reifenvulkanisationsform bevorzugt eine erfindungsgemäße Reifenvulkanisationsform ist, mit den folgenden Schritten:
a) Ausgeben eines Ausgabesignals und von Energie von einer Auswerteeinheit an eine Sendeempfangseinheit,
b) Übertragen des Ausgabesignals und der Energie von der Sendeempfangseinheit in Form einer elektromagnetischen Welle über einen Luftspalt an eine Antenne,
c) Umwandeln der elektromagnetischen Welle in eine mechanische Welle,
d) Verändern der mechanischen Welle in Abhängigkeit eines Parameters eines Vulkanisationsformteils
e) Umwandeln der veränderten mechanischen Welle in eine elektromagnetische Welle,
f) Übertragen der elektromagnetischen Welle mit der Antenne über den Luftspalt an die Sendeempfangseinheit,
g) Übertragen der elektromagnetischen Welle an die Auswerteeinheit,
h) Auswerten der empfangenen elektromagnetischen Welle.

Die ausgewerteten elektromechanischen Wellen beziehungsweise die Sensordaten können im nachfolgenden bewertet werden oder bevorzugt einer Regelung zum Regeln von Parametern der Reifenvulkanisationsform verwendet werden.

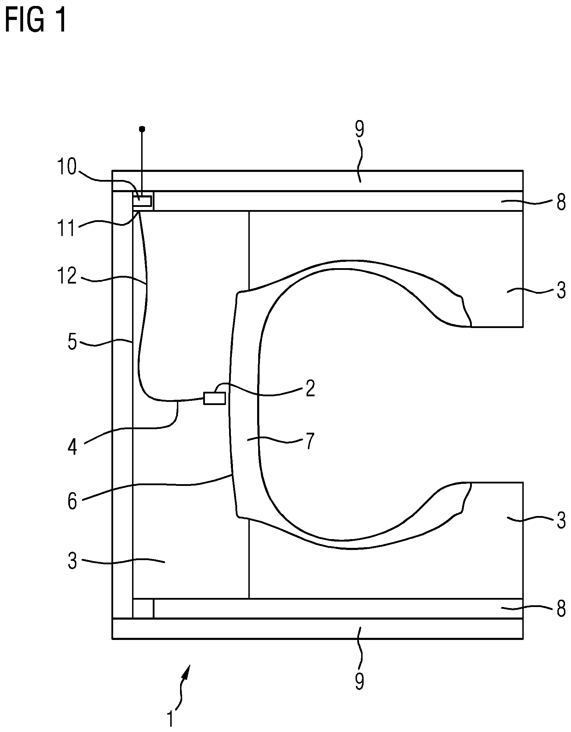

Die Erfindung lässt zahlreiche Ausführungsformen zu. Zur weiteren Verdeutlichung ihres Grundprinzips ist eine davon in der Zeichnung dargestellt und wird nachfolgend beschrieben. Diese zeigt in Fig. 1 eine Reifenvulkanisationsform mit Temperatursensor.

Figur 1 zeigt eine Reifenvulkanisationsform 1 mit einem Sensor 2, wobei der Sensor 2 ein Temperatursensor ist, der in einem verfahrbar gelagerten metallischem Vulkanisationsformteil 3 positioniert ist. Hierzu weist das Vulkanisationsformteil 3 eine Sackbohrung 4 auf, die von einer Außenfläche 5 des Vulkanisationsformteils 3 in Richtung einer Funktionsfläche 6 ausgerichtet ist und mit einem Abstand von 5 mm zur Funktionsfläche 6 endet. Die Funktionsflächen 6 sind Kontaktflächen, die bei der Reifenherstellung mit dem Reifen 7 in Kontakt treten und dessen Geometrie bestimmen.

Der Sensor 2 misst durch seine Position in unmittelbarer Nähe zum Reifen 7 mit einer hohen Genauigkeit dessen Temperatur, er beeinflusst jedoch nicht die Geometrie des Reifens 7, da er von dem Vulkanisationsformteil 3 umschlossen ist und nicht aus der Funktionsfläche 6 herausragt oder ein Teil der Funktionsfläche 6 ist.

An dem Vulkanisationsformteil 3 ist eine Heizplatte 8 angeordnet, die das Vulkanisationsformteil 3 und mittels dieser den Reifen 7 heizt. An der dem Vulkanisationsformteil 3 abgewandten Seite der Heizplatte 8 ist eine Abdeckung 9 angeordnet. Die Abdeckung 9 schirmt die Heizplatte 8 und das Vulkanisationsformteil 3 zur Umgebung ab. Die Abdeckung 9 ist zu Vulkanisationsformteilen 3 verfahrbar gelagert. An der Abdeckung 9 ist eine Sendeempfangseinheit 10 derart positioniert, dass er bei geschlossener Reifenvulkanisationsform 1 mit einem Abstand von weniger als 2 cm an einer Antenne 11 angeordnet ist. Die Antenne 11 ist mit einem Kabel 12 leitend mit dem Sensor 2 verbunden. Bei geschlossener Reifenvulkanisationsform 1 sendet die Sendeempfangseinheit 10 elektrische Signale aus, die von der Antenne 11 empfangen werden und mittels des Kabels 12 an den Sensor 2 übermittelt werden. Der Sensor 2 wandelt das elektrische Signal passiv in eine mechanische Welle, die temperaturabhängig variiert wird und folgend durch den Sensor 2 in ein elektrisches Signal zurück gewandelt wird und mittels des Kabels 12 an die Antenne 11 übermittelt wird. Die Antenne 11 sendet das elektrische Signal aus, das von der Sendeempfangseinheit 10 empfangen und kabelgebunden an eine Auswerteeinheit weitergeleitet wird.

### Bezugszeichenliste

- 1: Reifenvulkanisationsform
- 2: Sensor
- 3: Vulkanisationsformteil
- 4: Sackbohrung
- 5: Außenfläche

- 6: Funktionsfläche
- 7: Reifen
- 8: Heizplatte
- 9: Abdeckung
- 10: Sendeempfangseinheit

- 11: Antenne
- 12: Kabel

## Patentansprüche

1. Reifenvulkanisationsform (1) mit metallischen Vulkanisationsformteilen (3), wobei ein verfahrbar gelagertes Vulkanisationsformteil (3) einen Sensor (2) aufweist, wobei der Sensor (2) vom verfahrbar gelagerten Vulkanisationsformteil (3) umschlossen und im Bereich von einer Funktionsfläche (6) positioniert ist, **dadurch gekennzeichnet, dass**
elektromagnetische Wellen zur Datenübertragung und Energieübertragung über einen Luftspalt innerhalb der Reifenvulkanisationsform (1) von einer sich in der Reifenvulkanisationsform (1) befindenden Sendeempfangseinheit (10) zu einer zu der Sendeempfangseinheit (10) verfahrbar gelagerten mit dem Sensor (2) verbundenen Antenne (11) vorgesehen sind.

2. Reifenvulkanisationsform (1) nach Anspruch 1, **dadurch gekennzeichnet, dass** der Sensor (2), der bevorzugt ein passiver Sensor (2) ist, mit der verbundenen Antenne (11) zur Verwendung von Temperaturen bei einem Temperaturbereich bis 200°C bevorzugt bis 250°C und weiter bevorzugt bis 300°C ausgelegt ist.

3. Reifenvulkanisationsform (1) nach den Ansprüchen 1 oder 2, **dadurch gekennzeichnet, dass** der Sensor (2) mit der mit dem Sensor (2) verbundenen Antenne (11) ein mikroelektromechanisches System ist, wobei das mikroelektromechanische System bevorzugt ein piezoelektrisches Substrat aufweist.

4. Reifenvulkanisationsform (1) nach einem der vorangehenden Ansprüche, **dadurch gekennzeichnet, dass** das mikroelektromechanische System ein Oberflächenwellensensor ist.

5. Reifenvulkanisationsform (1) nach einem der vorangehenden Ansprüche, **dadurch gekennzeichnet, dass** der Sensor (2) ein Temperatursensor und/oder ein passives Element ist.

6. Reifenvulkanisationsform (1) nach einem der vorangehenden Ansprüche, **dadurch gekennzeichnet, dass** der Sensor (2) an die Sendeempfangseinheit (10) unverarbeitete Sensordaten übermitteln.

7. Reifenvulkanisationsform (1) nach einem der vorangehenden Ansprüche, **dadurch gekennzeichnet, dass** die Funktionsfläche (6) eine Kontaktfläche zum in Kontakt treten mit einem Reifen (7) ist.

8. Reifenvulkanisationsform (1) nach einem der vorangehenden Ansprüche, **dadurch gekennzeichnet, dass** die Sendeempfangseinheit (10) zur Datenübertragung und Energieübertragung eine Kabelverbindung zu einer Auswerteinheit und eine Senderantenne aufweist.

9. Reifenvulkanisationsform (1) nach einem der vorangehenden Ansprüche, **dadurch gekennzeichnet, dass**
der Sensor (2) in einer Bohrung in dem Vulkanisationsformteil positioniert ist, wobei die Bohrung eine Sackbohrung (4) ist, die von einer der Funktionsfläche (6) abgewandten Außenfläche (5) des Vulkanisationsformteils (3) bis an die Funktionsfläche (6) ausgeführt ist.

10. Vorrichtung mit einer Reifenvulkanisationsform (1) nach einem der vorangehenden Ansprüche, **dadurch gekennzeichnet, dass** die Vorrichtung eine Auswerteeinheit aufweist, wobei die Auswerteeinheit zur Energieübertragung und bevorzugt zur Datenübertragung eine Verbindung, bevorzugt eine Kabelverbindung, zur Sendeempfangseinheit (10) aufweist.

11. Verfahren zum Ermitteln eines Parameters einer Reifenvulkanisationsform (1), bevorzugt einer Reifenvulkanisationsform (1) nach einem der Ansprüche 1 bis 9, mit den folgenden Schritten:
a) Ausgeben eines Ausgabesignals und von Energie von einer Auswerteeinheit an eine Sendeempfangseinheit (10),
b) Übertragen des Ausgabesignals und der Energie von der Sendeempfangseinheit (10) in Form einer elektromagnetischen Welle über einen Luftspalt an eine Antenne (11),
c) Umwandeln der elektromagnetischen Welle in eine mechanische Welle,
d) Verändern der mechanischen Welle in Abhängigkeit eines Parameters eines Vulkanisationsformteils (3),
e) Umwandeln der veränderten mechanischen Welle in eine elektromagnetische Welle,
f) Übertragen der elektromagnetischen Welle mit der Antenne (3) über den Luftspalt an die Sendeempfangseinheit (10),
g) Übertragen der elektromagnetischen Welle an die Auswerteeinheit,
h) Auswerten der empfangenen elektromagnetischen Welle.

## Claims

1. Tyre vulcanizing mould (1) with metal vulcanizing mould parts (3), wherein a movably mounted vulcanizing mould part (3) has a sensor (2), wherein the sensor (2) is enclosed by the movably mounted vulcanizing mould part (3) and is positioned in the region of a functional surface (6), **characterized in that** electromagnetic waves are provided for data transmission and energy transmission via an air gap inside the tyre vulcanizing mould (1) from a transceiving unit (10), which is located in the tyre vulcanizing mould (1), to an antenna (11), which is movably mounted with respect to the transceiving unit (10) and is connected to the sensor (2).

2. Tyre vulcanizing mould (1) according to Claim 1, **characterized in that** the sensor (2), which is preferably a passive sensor (2), with the connected antenna (11) is designed for use of temperatures in a temperature range up to 200°C, preferably up to 250°C and more preferably up to 300°C.

3. Tyre vulcanizing mould (1) according to Claims 1 and 2, **characterized in that** the sensor (2) with the antenna (11) connected to the sensor (2) is a microelectromechanical system, wherein the microelectromechanical system preferably has a piezoelectric substrate.

4. Tyre vulcanizing mould (1) according to one of the preceding claims, **characterized in that** the microelectromechanical system is a surface wave sensor.

5. Tyre vulcanizing mould (1) according to one of the preceding claims, **characterized in that** the sensor (2) is a temperature sensor and/or a passive element.

6. Tyre vulcanizing mould (1) according to one of the preceding claims, **characterized in that** the sensor (2) transmits unprocessed sensor data to the transceiving unit (10).

7. Tyre vulcanizing mould (1) according to one of the preceding claims, **characterized in that** the functional surface (6) is a contact surface for coming into contact with a tyre (7).

8. Tyre vulcanizing mould (1) according to one of the preceding claims, **characterized in that** the transceiving unit (10) has for data transmission and energy transmission a cable connection to an evaluation unit and a transmitter antenna.

9. Tyre vulcanizing mould (1) according to one of the preceding claims, **characterized in that**
the sensor (2) is positioned in a hole in the vulcanizing mould part, wherein the hole is a blind hole (4), which is made from an outer surface (5) of the vulcanizing mould part (3) that is facing away from the functional surface (6) up to the functional surface (6).

10. Device with a tyre vulcanizing mould (1) according to one of the preceding claims, **characterized in that** the device has an evaluation unit, wherein the evaluation unit has for energy transmission and preferably for data transmission a connection, preferably a cable connection, to the transceiving unit (10).

11. Method for determining a parameter of a tyre vulcanizing mould (1), preferably a tyre vulcanizing mould (1) according to one of Claims 1 to 9, with the following steps:
a) outputting an output signal and energy from an evaluation unit to a transceiving unit (10),
b) transferring the output signal and the energy from the transceiving unit (10) in the form of an electromagnetic wave via an air gap to an antenna (11),
c) converting the electromagnetic wave into a mechanical wave,
d) modifying the mechanical wave in dependence on a parameter of a vulcanizing mould part (3),
e) converting the modified mechanical wave into an electromagnetic wave,
f) transferring the electromagnetic wave with the antenna (3) via the air gap to the transceiving unit (10),
g) transferring the electromagnetic wave to the evaluation unit,
h) evaluating the received electromagnetic wave.

## Revendications

1. Moule de vulcanisation de pneus (1) avec des parties de moule de vulcanisation métalliques (3), une partie de moule de vulcanisation (3) montée de manière déplaçable présentant un capteur (2), le capteur (2) étant entouré par la partie de moule de vulcanisation (3) montée de manière déplaçable et positionné dans la zone d'une surface fonctionnelle (6), **caractérisé en ce que**
des ondes électromagnétiques sont prévues pour la transmission de données et la transmission d'énergie à travers un espace d'air à l'intérieur du moule de vulcanisation de pneus (1) depuis une unité d'émission-réception (10) se trouvant dans le moule de vulcanisation de pneus (1) vers une antenne (11) montée de manière déplaçable par rapport à l'unité d'émission-réception (10) et reliée au capteur (2).

2. Moule de vulcanisation de pneus (1) selon la revendication 1, **caractérisé en ce que** le capteur (2), qui est de préférence un capteur passif (2), est conçu avec l'antenne reliée (11) pour être utilisé à des températures dans une plage de températures de jusqu'à 200 °C, de préférence jusqu'à 250 °C et de manière davantage préférée jusqu'à 300 °C.

3. Moule de vulcanisation de pneus (1) selon les revendications 1 ou 2, **caractérisé en ce que** le capteur (2) avec l'antenne (11) reliée au capteur (2) est un système microélectromécanique, le système microélectromécanique présentant de préférence un substrat piézoélectrique.

4. Moule de vulcanisation de pneus (1) selon l'une quelconque des revendications précédentes, **caractérisé en ce que** le système microélectromécanique est un capteur à ondes de surface.

5. Moule de vulcanisation de pneus (1) selon l'une quelconque des revendications précédentes, **caractérisé en ce que** le capteur (2) est un capteur de température et/ou un élément passif.

6. Moule de vulcanisation de pneus (1) selon l'une quelconque des revendications précédentes, **caractérisé en ce que** le capteur (2) transmet des données de capteur non traitées à l'unité d'émission-réception (10).

7. Moule de vulcanisation de pneus (1) selon l'une quelconque des revendications précédentes, **caractérisé en ce que** la surface fonctionnelle (6) est une surface de contact destinée à entrer en contact avec un pneu (7).

8. Moule de vulcanisation de pneus (1) selon l'une quelconque des revendications précédentes, **caractérisé en ce que** l'unité d'émission-réception (10) destinée à la transmission de données et à la transmission d'énergie présente une liaison par câble à une unité d'évaluation et une antenne émettrice.

9. Moule de vulcanisation de pneus (1) selon l'une quelconque des revendications précédentes, **caractérisé en ce que**
le capteur (2) est positionné dans un alésage dans la partie de moule de vulcanisation, l'alésage étant un alésage borgne (4) qui est réalisé depuis une surface extérieure (5) de la pièce de moule de vulcanisation (3) détournée de la surface fonctionnelle (6) jusqu'à la surface fonctionnelle (6).

10. Dispositif avec un moule de vulcanisation de pneus (1) selon l'une quelconque des revendications précédentes, **caractérisé en ce que** le dispositif présente une unité d'évaluation, l'unité d'évaluation présentant une liaison, de préférence une liaison par câble, vers l'unité d'émission-réception (10) pour la transmission d'énergie et de préférence pour la transmission de données.

11. Procédé pour déterminer un paramètre d'un moule de vulcanisation de pneus (1), de préférence d'un moule de vulcanisation de pneus (1) selon l'une quelconque des revendications 1 à 9, avec les étapes suivantes :
a) l'émission d'un signal de sortie et d'énergie depuis une unité d'évaluation vers une unité d'émission-réception (10),
b) la transmission du signal de sortie et de l'énergie depuis l'unité d'émission-réception (10) sous la forme d'une onde électromagnétique à travers un espace d'air vers une antenne (11),
c) la conversion de l'onde électromagnétique en une onde mécanique,
d) la modification de l'onde mécanique en fonction d'un paramètre d'une partie de moule de vulcanisation (3),
e) la conversion de l'onde mécanique modifiée en une onde électromagnétique,
f) la transmission de l'onde électromagnétique à l'unité d'émission-réception (10) à travers l'espace d'air avec l'antenne (3),
g) la transmission de l'onde électromagnétique à l'unité d'évaluation,
h) l'évaluation de l'onde électromagnétique reçue.
